**Europäisches Patentamt**

**European Patent Office**

**Office européen des brevets**

(11) Veröffentlichungsnummer: **0 099 961**
**A1**

# (12) EUROPÄISCHE PATENTANMELDUNG

(21) Anmeldenummer: **83103918.5**

(22) Anmeldetag: **21.04.83**

(51) Int. Cl.³: **B 01 D 3/42,** B 01 L 3/00,
B 01 D 15/08

(30) Priorität: **28.07.82 CH 4575/82**

(43) Veröffentlichungstag der Anmeldung: **08.02.84**
**Patentblatt 84/6**

(84) Benannte Vertragsstaaten: **AT CH DE FR GB IT LI NL SE**

(71) Anmelder: **CONTRAVES AG, Schaffhauserstrasse 580,**
**CH-8052 Zürich (CH)**

(72) Erfinder: **Zemp, Georg, Friedheimstrasse 26,**
**CH-8057 Zürich (CH)**

(54) **Vorrichtung zur Aufteilung einer rieselnden Substanz.**

(57) Eine rieselnde Substanz wird von einem Zufluß (1) wahlweise zu einem von mehreren Abflüssen (2) zugeleitet. Dazu ist ein Umleitelement (17) mit einem Abstützteil (18) und einem rohrförmigen Auslauf (19) versehen. Der Auslauf (19) kann starr oder flexibel sein; er ist am unteren Ende (25) mit einem magnetischen Körper (20) versehen und mittels des Abstützteils (18) auf die Wandung (5) der Kammer (4) schwenkbar abgestützt. Die Schwenkung erfolgt durch Wirkung eines außerhalb der Kammer (4) der Vorrichtung erzeugten Magnetfeldes. Der magnetische Körper (20) kann hülsenförmig sein und den Auslauf (19) koaxial umschließen oder in der Wandung (21) des Auslaufs eingebettet sein; der Auslauf (19) oder das gesamte Umleitelement (17) können magnetisch sein. Eine Verengung (24) der Kammer (4) kann zur Abstützung des Umleitelements (17) vorgesehen werden; sie besteht aus einer Einschnürung der Wandung (5), einer Scheibe oder einem Ring (29), einer Anzahl konsolenartiger Stützelemente (31, 32) oder noch einem Flansch (35) des Umleitelements (17). Das Umleitelement (17) kann auch ein am Zufluß (1) befestigter Schlauch sein.

0099961
P-481

## Vorrichtung zur Aufteilung einer rieselnden Substanz

Die Erfindung betrifft eine Vorrichtung zur wahlweisen Zuleitung einer rieselnden Substanz von einem Zufluss zu einem von mehreren Abflüssen, gemäss dem Oberbegriff des Anspruchs 1. Die Substanz kann eine rieselnde Flüssigkeit, insbesondere ein Destillat, ein Kondensat oder eine Fraktion am Ausgang einer Destillier-, Rektifizier- oder Chromatographiesäule sein; die Substanz kann aber auch ein rieselfähiges Pulver sein; in beiden Fällen rieselt sie unter der Wirkung des natürlichen Gefälles in der Vorrichtung.

Eine Vorrichtung der erwähnten Gattung ist beispielsweise aus der DE-OS 1619708 bekannt. Bei dieser bekannten Vorrichtung ist jedoch nachteilig, dass die kraftschlüssige Verbindung zwischen dem bewegbaren Umleitelement und dem bewegbaren magnetischen Körper durch die Wandung der Kammer hindurchgeführt wird: die Schaffung eines dichten und sauberen, das heisst chemisch inaktiven Durchgangs stellt Probleme, deren in der DE-OS 1619708 angegebene Lösung kompliziert und teuer ist. Das Ausüben einer Kraft auf den magnetischen Körper durch ein an der Aussenseite der Wandung der Kammer angeordnetes Mittel zum Erzeugen eines Magnetfeldes, wobei das Magnetfeld durch die Wandung auf den magnetischen Körper wirkt, ist in seinem Prinzip zum Beispiel aus der DE-PS 1028536 oder aus der DE-OS 1619685 bekannt: die Anwendung dieser Lehre auf die bekannte gattungsgemässe Vorrichtung ist jedoch nicht ohne erfinderisches Dazutun möglich, weil das Umleitelement in der bekannten Vorrichtung mittels der durch die Wandung geführten Verbindung gleichzeitig bewegt und auf die Wandung abgestützt ist. Diese Abstützfunktion der Verbindung fällt aus, wenn die Kraftübertragung rein magnetisch durch die Wandung hindurch, das heisst immateriell mittels eines Magnetfeldes erfolgt. Eine Abstützung ist zwar der DE-PS 1028536 zu entnehmen, sie ist jedoch seitenverkehrt in dem Sinne, dass ein einziger Abfluss von mehreren Zuflüssen gespeist wird, was der gattungsgemässen Vorrichtung nicht entspricht und sich auch nicht in diese umkehren lässt.

Aufgabe der Erfindung ist daher, eine Vorrichtung der eingangs genannten Art zu schaffen, die auf einfache und kostengünstige Weise eine dichte und saubere, das heisst chemisch inaktive Betätigung des Umleitelements zwischen seinen verschiedenen Raststellungen gewährleistet. Zur Lösung dieser Aufgabe ist die erfindungsgemässe Vorrichtung gekennzeichnet durch die im Anspruch 1 angegebenen Merkmale. Vorteilhafte Ausbildungen ergeben sich aus den Unteransprüchen.

Die Erfindung wird nun anhand der Zeichnung näher erläutert. Es zeigen:

Fig. 1 ein erstes Ausführungsbeispiel der Vorrichtung im Mittellängsschnitt;

Fig. 2 einen Querschnitt der Vorrichtung gemäss der Linie A-A in Fig. 1;

Fig. 3 ein erstes Ausführungsbeispiel des Umleitelements im Mittellängsschnitt;

Fig. 4 ein zweites Ausführungsbeispiel des Umleitelements im Mittellängsschnitt;

Fig. 5 eine Variante der Ausbildung eines Zuflusses im Mittellängsschnitt;

Fig. 6 ein drittes Ausführungsbeispiel des Umleitelements im Mittellängsschnitt;

Fig. 7 ein viertes Ausführungsbeispiel des Umleitelements im Mittellängsschnitt;

Fig. 8 eine Variante des ersten Ausführungsbeispiels der Vorrichtung im Mittellängsschnitt;

Fig. 9    eine Variante der Ausbildung der Verengung der
          Kammer im Mittellängsschnitt der Vorrichtung;

Fig. 10   dieselbe Variante der Ausbildung der Kammer im
          Querschnitt der Vorrichtung gemäss der Linie
          B-B in Fig. 9;

Fig. 11   eine andere Variante der Ausbildung der Kammer
          im Querschnitt der Vorrichtung gemäss der Linie
          B-B in Fig. 9:

Fig. 12   eine weitere Variante der Ausbildung der Kammer
          im Querschnitt der Vorrichtung gemäss der Linie
          B-B in Fig. 9;

Fig. 13   ein drittes Ausführungsbeispiel des Umleitelements in Kombination mit dem ersten Ausführungsbeispiel der übrigen Teile der Vorrichtung im
          Mittellängsschnitt;

Fig. 14   das dritte Ausführungsbeispiel des Umleitelements im Mittellängsschnitt;

Fig. 15   ein viertes Ausführungsbeispiel des Umleitelements in Kombination mit einem zweiten Ausführungsbeispiel der übrigen Teile der Vorrichtung im Mittellängsschnitt;

Fig. 16   das vierte Ausführungsbeispiel des Umleitelements im Mittellängsschnitt;

Fig. 17   ein fünftes Ausführungsbeispiel des Umleitelements in Kombination mit einem dritten Ausführungsbeispiel der übrigen Teile der Vorrichtung im Mittellängsschnitt.

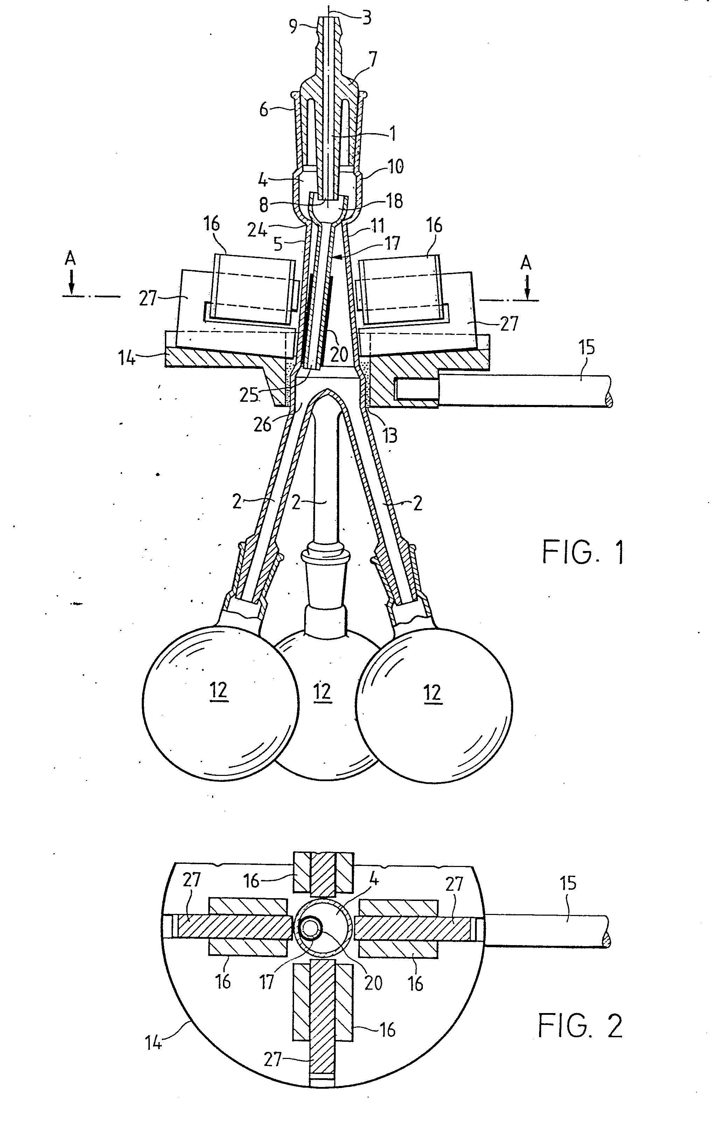

In Fig. 1 und 2 ist eine Vorrichtung dargestellt, die
einen Zufluss 1 und beispielsweise vier Abflüsse 2 aufweist. Die Vorrichtung ist um eine Achse 3 drehsymmetrisch mit einer vierfachen Symmetrieordnung ausgebildet.
In der Betriebsstellung der Vorrichtung liegt diese
Achse 3 vertikal, der in Fig. 1 dargestellte Mittellängsschnitt in einer vertikalen Ebene und der in Fig. 2

- 4 -

0099961

dargestellte Querschnitt in einer horizontalen Ebene, deren Spur in Fig. 1 durch die Linie A-A dargestellt wird. Im nachstehenden wird angenommen, dass die Vorrichtung sich stets in dieser Betriebsstellung befindet.

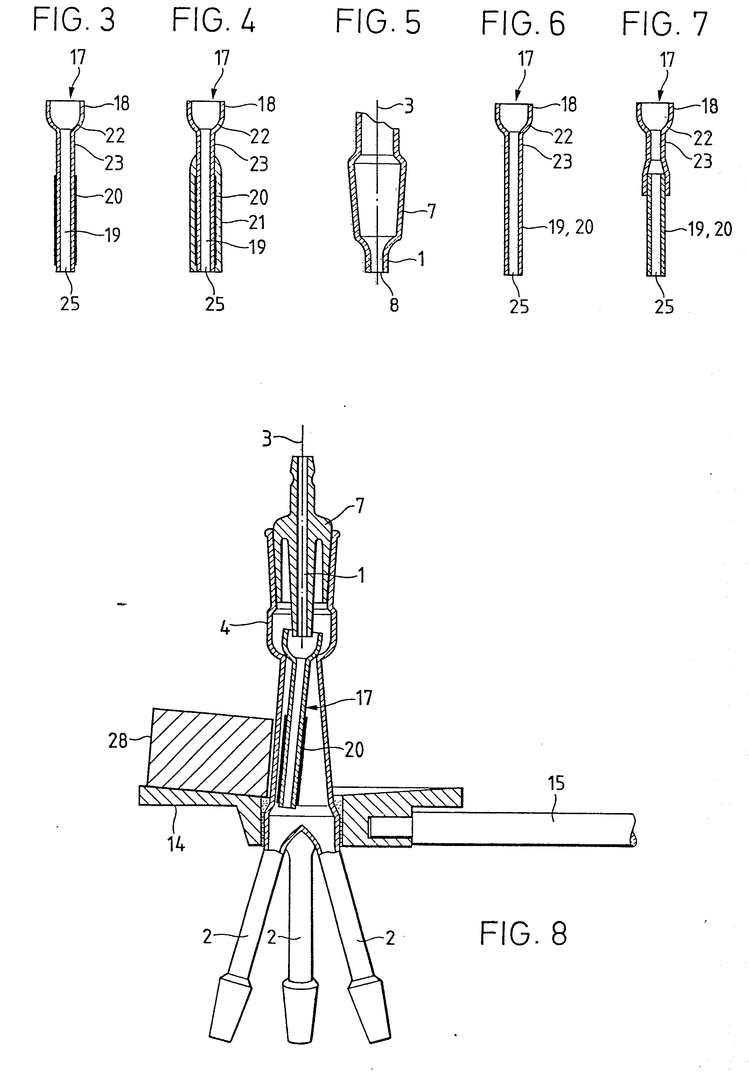

Die Vorrichtung weist eine Kammer 4 auf, deren Wandung 5 aus Glas oder aus einem anderen steifen, für Bauteile des chemischen Labors geeigneten Material besteht, sofern dieses Material nichtmagnetisch ist, also beispielsweise aus Edelstahl, steifem Polyäthylen, steifem Polytetrafluoräthylen und dergleichen. Am oberen Ende der Kammer 4 geht die Wandung 5 in eine Normschliff-Hülse 6 über. In die Hülse 6 ist als Gegenstück ein Normschliff-Kern 7 aus gleichem oder äquivalentem Material lösbar eingesteckt. Der Kern 7 dient als Träger und Stütze für den rohrförmigen Zufluss 1, dessen unteres Ende 8 in der Kammer 4 etwas unterhalb der Hülse 6 beziehungsweise des Kerns 7 liegt. In Fig. 1 ist der rohrförmige Zufluss 1 mit einem als Rohr mit Olive ausgebildeten Stutzen 9 verbunden und am oberen Rand des Kerns 7 dicht abgestützt: eine solche Ausführung ist jedoch nur ein Beispiel, in einer in Fig. 5 dargestellten Variante ist der Kern 7 als unterer Teil einer nicht näher dargestellten anderen Vorrichtung, beispielsweise einer Kolonne ausgebildet, während der rohrförmige Zufluss 1 am unteren Rand des Kerns 7 dicht abgestützt ist.

Die Kammer 4 besteht aus einem in die Hülse 6 übergehenden oberen Teil 10 und einem unteren Teil 11, der auf an sich bekannte Weise als Verteiler einer Destilliervorlage nach Bredt mit vier Kolben ausgebildet ist (vgl. z.B. den Prospekt der Firma Normschliff Gerätebau K.G., Wertheim, Bundesrepublik Deutschland, aus dem Jahre 1977). Zum besseren Verständnis sind in Fig. 1 Rundkolben 12 an die Abflüsse 2 angeschlossen, wobei im dargestellten Mittellängsschnitt je einer der Abflüsse 2 und der Kolben 12 nicht sichtbar sind. Selbstverständlich gehören die Kolben 12 nicht zur Vorrichtung, und die mit Normschliff-Kernen endenden Abflüsse 2 können anders ausgebildet sein, beispielsweise gekrümmt, nicht mit Kernen versehen und dergleichen.

Am unteren Ende 13 der Kammer 4, gerade oberhalb des Ueberganges von der Kammer 4 zu den Abflüssen 2, ist die Wandung 5 der Kammer 4 im wesentlichen zylindrisch ausgebildet. An dieser Stelle 13 ist die Kammer, beziehungsweise ihre Wandung, in eine entsprechende zylindrische Ausnehmung einer Tragplatte 14 eingesetzt und darin verklebt. Die Tragplatte 14 ist mit einem Stativstab 15 verbunden und mit dessen Hilfe abstützbar und befestigbar, beispielsweise an einem üblichen Laborstativ. Auf der Tragplatte sind, in jeweiliger Zuordnung zu je einem der Abflüsse 2, vier Elektromagneten 16 drehsymmetrisch zur Achse 3 so angeordnet und befestigt, dass jeweils mindestens ein magnetischer Pol in Nähe der Wandung 5 erzeugt wird, wenn ein Elektromagnet 16 Strom erhält. In Fig. 1 ist dargestellt, dass der Kern 27 jedes Elektromagneten 16 C-förmig ausgebildet sein kann, wobei in diesem Fall die beiden Pole an den beiden Enden des C-Kerns 27 in Nähe der Wandung 5 liegen.

Ein Umleitelement 17 aus Glas ist in Fig. 1 und in derselben Ausbildung in Fig. 3 dargestellt. Es umfasst einen Abstützteil 18 und einen rohrförmigen Auslauf 19. Ein magnetischer Körper 20, dessen Beschaffenheit weiter unten erläutert wird, ist hülsenförmig ausgebildet und so am Auslauf 19 angeordnet, dass es diesen aussenseitig koaxial umschliesst und daran form- und kraftschlüssig befestigt ist, beispielsweise durch reibungsstarke Passung einer Hülse oder einer Schraubenfeder, Verklebung, Glasbläser-Arbeit am Umleitelement und dergleichen. In einer in Fig. 4 dargestellten Variante ist der magnetische Körper 20 in die Wandung des Auslaufs 19 eingebettet, was beispielsweise dadurch erreicht wird, dass nach der Herstellung eines Umleitelements mit magnetischem Körper nach Fig. 3 ein zusätzliches Glasrohr über den Auslauf und den magnetischen Körper hülsenartig angeordnet und mit dem Auslauf zusammengeschmolzen, verklebt u. dgl. wird. Wie bei der Wandung 5 der Kammer 4 kann das Umleitelement 17 auch aus anderem, nichtmagnetischem Material bestehen, wie im vorangehenden bereits erwähnt wurde. Ferner kann, wie in Fig. 6 und 7 dargestellt wird, das gesamte Umleitelement 17 oder auch nur der Auslauf 19 aus magnetischem Material bestehen, so dass der Auslauf 19 in diesen Varianten gleichsam den magnetischen Körper 20 bildet, beziehungsweise dessen Rolle übernimmt.

Als Material für den magnetischen Körper 20 können sowohl weichmagnetische Materialien, typisch Weicheisen, wie auch permanentmagnetische Materialien, beispielsweise ferromagnetische Legierungen, Ferritzusammensetzungen und dergleichen verwendet werden: von Belang ist, dass die Elektromagneten 16 darauf eine Kraft ausüben, wenn sie mit Strom gespeist werden, und dass in den Varianten nach Fig. 3, 6 und 7 das magnetische Material gegenüber der in der Vorrichtung rieselnden Substanz (vgl. die Erläuterungen weiter unten) chemisch inaktiv bleibt wie beispielsweise Ferrit oder Nickel gegenüber einem Alkohol oder den meisten wässrigen Lösungen um pH 7.

In Fig. 3, 4, 6 und 7 ist im Umleitelement 17 der Abstützteil 18 als kelchförmiger Trichter ausgebildet, der nach unten zum Auslauf 19 führt. Der dem Auslauf 19 benachbarte Teil 22 des Trichterkelches ist im wesentlichen als Kugelzone ausgebildet, die nach unten in den oberen Teil 23 des Auslaufs 19 übergeht. In der Variante nach Fig. 7 ist vorgesehen, dass der eigentliche Auslauf 19 aus magnetischem Material in den nichtmagnetischen oberen Teil 23 des Auslaufs eingepasst, verklebt oder sonstwie befestigt ist. Dieser eigentliche Auslauf 19 ist zumindest doppelt so lang wie breit, das heisst es wird damit ein längliches Rohrstück gebildet. Der obere, dem Auslauf 19 abgewandte Teil des Abstützteils 18 ist in den Fig. 3, 4, 6 und 7 zylindrisch dargestellt, er darf aber auch konisch sein oder überhaupt ausfallen, das heisst der Abstützteil ist dann im wesentlichen (das heisst abgesehen vom Anschluss an den Auslauf) halbkugelförmig.

Das im vorangehenden beschriebene Umleitelement 17 ist, wie in Fig. 1 dargestellt, in der Vorrichtung innerhalb der Kammer 4 so eingesetzt, dass das untere Ende 8 des Zuflusses 1 über dem Trichter des Abstützteils 18 zu liegen kommt. Der obere Teil 10 der Kammer 4 umschliesst den Abstützteil 18 und der untere Teil 11 der Kammer 4 umschliesst den Auslauf 19. Beim Uebergang vom oberen Teil 10 zum unteren Teil 11 der Kammer 4 weist diese auf ihrer Innenseite eine Verengung 24 auf (die entsprechende Verengung auf der Aussenseite der Kammer 4 ist für die Funktion der Vorrichtung nicht von Belang). Die Verengung 24 ist, in der in Fig. 1 dargestellten Ausbildung, eine im wesentlichen um die Achse 3 rotationssymmetrische, horizontale Einschnürung, deren Innendurchmesser kleiner ist als der Aussendurchmesser des Abstützteils 18, aber grösser als der grösste Aussendurchmesser des Auslaufs 19. Auf diese Weise ist der Auslauf 19 einschliesslich seines oberen Teils 23 nach unten durch die Einschnürung hindurchführbar, während der Abstützteil 18 an der Einschnürung abgestützt wird und auf diese Weise das gesamte Umleitelement 17 durch die Verengung 24 der Kammer 4 in vertikaler Richtung gehaltert wird. Zwischen der Verengung 24 und dem darin angeordneten oberen Teil 23 des Auslaufs 19 ist das Spiel so bemessen, dass der Auslauf 19 in eine Schräglage gebracht werden kann, bei der das untere Ende 25 des Auslaufs 19 über einen Eingangstrichter 26 eines Abflusses 2 zu liegen kommt. Die kugelzonenförmige Gestalt des am Auslauf 19 benachbarten Teils 22 des Abstützteils 18 (das heisst des Trichterkelches) bewirkt in Kombination mit der rotationssymmetrischen Form der horizontalen Einschnürung, dass der Kontakt zwischen dem Abstützteil 18 und der Wandung 5 entlang einer horizontalen kreisförmigen Linie stattfindet, die unverändert bleibt, wenn der Auslauf innerhalb dem ihm von der Kammer 4 gebotenen Spielraum bewegt wird: dieser Spielraum ist so bemessen, dass der Auslauf über einen beliebigen der vier Eingangstrichter 26 der Abflüsse 2 positioniert und von einer beliebigen zu einer anderen beliebigen dieser Stellungen bewegt werden kann. Das Umleitelement 17 ist also mittels des Abstützteils 18 auf die Wandung 5 schwenkbar abgestützt, wobei der Drehpunkt einer momentanen Schwenkung im wesentlichen im Zentrum der vom Trichterkelch gebildeten Kugelzone liegt, dieser Trichterkelch bei der Schwenkung im wesentlichen ortsfest bleibt und nur der obere, dem Auslauf 19 abgewandte Teil des Abstützteils 18 eine kleine Kippbewegung durchführt.

Die Elektromagneten 16 sind an der Wandung 5 der Kammer 4 so angeordnet, dass ihre Kerne 27 den magnetischen Körper 20 des Umleitelements 17 jeweils in eine der Positionen ziehen und halten können, in denen der Auslauf 19 über einem Eingangstrichter 26 eines Abflusses 2 liegt: in der in Fig. 1 gezeichneten Position des Umleitelements 17 wird nur der benachbarte Elektromagnet mit Strom gespeist, so dass ein aus weichmagnetischem Material bestehender magnetischer Körper 20 vom Kern des betreffenden Elektromagneten angezogen wird. In einer Variante kann der magnetische Körper aus ferromagnetischem Material oder aus Ferrit bestehen, auch dann wird er vom gespeisten Elektromagneten angezogen werden können. In einer anderen, in Fig. 8 dargestellten Variante wird anstelle der vier Elektromagneten 16 und deren Kerne 27 nur ein einziges magnetisches Positionierelement 28 verwendet. Besteht der magnetische Körper 20 aus Weicheisen oder äquivalentem weichmagnetischem Material, so wird als magnetisches Positionierelement 28 ein Magnet gewählt; ist hingegen der magnetische Körper 20 selbst ein Magnet, so kann als magnetisches Positionierelement 28 entweder ein Magnet oder auch ein weichmagnetisches Element gewählt werden. In beiden Fällen wird das magnetische Positionierelement 28 anstelle des in der Variante nach Fig. 1 gespeisten Elektromagneten verwendet, das heisst, das magnetische Positionierelement 28 wird auf die Trägerplatte 14 in Nähe des Abflusses 2 gesetzt, über dessen Eingangstrichter 26 der Auslauf 19 des Umleitelements 17 liegen soll: dadurch wird der magnetische Körper 20 vom magnetischen Positionierelement 28 angezogen und das Umleitelement 17 in die gewünschte Schräglage gebracht. Es ist ersichtlich, dass in allen Fällen die dem gespeisten Elektromagneten 16, beziehungsweise dessen Kern 27 oder dem magnetischen Positionierelement 28, nächstliegende Position des Umleitelements 17 stabil ist und daher eine Raststellung bildet. Je einem Abfluss 2, beziehungsweise seinem Eingangstrichter 26, ist je eine Raststellung zugeordnet. Durch Umschalten der Speisung zwischen den Elektromagneten 16 oder durch Verlagerung des magnetischen Positionierelements 28 ist das Umleitelement 17 zwischen den Raststellungen

0099961

bewegbar, wobei die Kammer 4, beziehungsweise ihre Wandung 5, so ausgebildet ist, dass sie den vom Umleitelement 17 in den Raststellungen beanspruchten Raum sowie den vom Umleitelement in seiner Bewegung zwischen den Raststellungen beschriebenen Raum umschliesst und somit die Positionierung des Umleitelements in den Raststellungen und seine Bewegung zwischen den Raststellungen nicht behindert.

Die beschriebene Vorrichtung ist dazu verwendbar, eine dem Zufluss zugeleitete rieselfähige Substanz wahlweise einem der Abflüsse 2 zuzuleiten, indem die Substanz vom Zufluss 1 in den trichterförmigen Abstützteil 18 des Umleitelements 17 rieselt, von dort zum Auslauf 19 gelangt und vom unteren Ende 25 des Auslaufs 19 an den gewünschten Eingangstrichter 26 eines Abflusses 2 abgegeben wird, welcher der gewählten Raststellung des Umleitelements 17 entspricht. Als rieselfähige Substanzen kommen beispielsweise in Frage: ein flüssiges Destillat oder ein flüssiges Kondensat, wobei der Zufluss 1 an den Ablauf eines Kühlers einer Destillieranlage beziehungsweise eines chemischen Reaktors angeschlossen ist, oder noch eine flüssige chromatographische Fraktion, wobei der Zufluss 1 an den Ablauf einer chromatographischen Kolonne angeschlossen ist. Es gibt auch rieselfähige Feststoffe, für welche die Vorrichtung anwendbar ist, zum Beispiel Sand oder gewisse Pulver, in einem solchen Fall ist der Zufluss 1 der Vorrichtung beispielsweise bei der Fraktionierung des Feststoffes für Analysezwecke an einen Abscheider angeschlossen, der den rieselfähigen Feststoff von einem Luft- oder Gasstrom abscheidet.

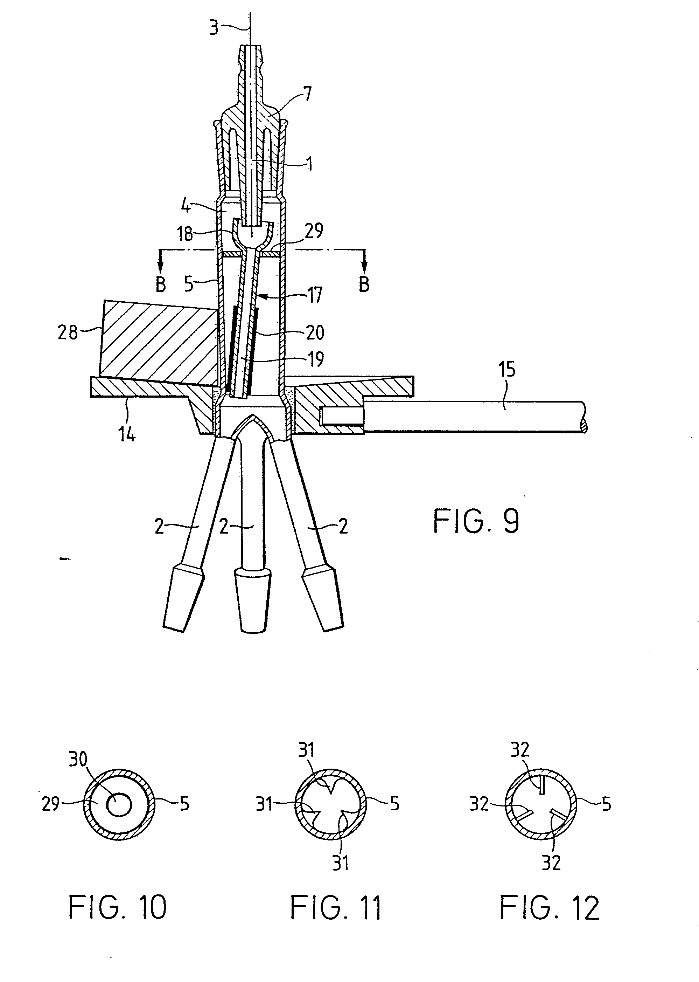

Für die vertikale Abstützung und die freie seitliche Schwenkung des Umleitelements 17 ist - wie erwähnt - entscheidend, dass der Kontakt zwischen dem Abstützteil 18 und der Wandung 5 entlang einer horizontalen kreisförmigen Linie stattfindet. Diese Bedingung kann auf andere als die bereits beschriebene Weise erfüllt werden. In Fig. 9 und 10 wird dargestellt, dass eine im wesentlichen zylindrische Wandung 5 der Kammer 4 mit einer darin verklebten, mit Reibung eingepassten oder sonstwie abgestützten Scheibe 29 versehen sein kann. Die Scheibe 29 weist ein zentrales Loch 30 auf, durch welches der Auslauf 19 des Umleitelements 17 durchgeführt wird, während der Abstützteil 18 auf der Scheibe 29 beziehungsweise am Rande des Lochs 30 abgestützt wird. Als besondere Ausführung der Scheibe 29 kann auch ein Ring verwendet werden, da es auf die Kontaktlinie und nicht auf die Dicke der Scheibe ankommt; zeichnerisch gilt Fig. 10 sowohl für eine Scheibe als für einen Ring, beide Elemente können in der Ausdrucksweise "im wesentlichen scheibenförmig" zusammengefasst werden, wobei die Verengung der Kammer 4 von diesem im wesentlichen scheibenförmigen Element gebildet wird. In einer weiteren, in Fig. 11 dargestellten Ausbildung der Verengung der Kammer 4 werden Stützelemente konsolenartig an der Wandung 5 der Kammer 4 ins Innere der Kammer 4 hineinragend angeordnet. In der in Fig. 11 dargestellten Variante werden drei Stützelemente so gebildet, dass auf bekannte Weise im thermisch aufgeweichten Zustand der aus Glas bestehenden Wandung 5 durch Andrücken eines Graphitstiftes Spitzen 31 in die Wandung eingedrückt werden, wobei die Spitzen in einer horizontalen Ebene liegen und einander möglichst gleich sind: so kann der Abstützteil 18 des Umleitelements 17 auf drei einen horizontalen Kreis definierenden Kontaktpunkten abgestützt werden, während der Auslauf 19 des Umleitelements 17 zwischen den Spitzen 31 durchgeführt wird. Ein äquivalentes Resultat kann mit mehr als drei Spitzen erreicht werden, allerdings mit der Schwierigkeit, die Spitzen präzis in einer horizontalen Ebene und einander gleich zu bilden. Auch können die Stützelemente wie in Fig. 12 dargestellt aus Stiften 32 bestehen, die an der Innenseite der Wandung 5 angeordnet und an der Wandung 5 befestigt, zum Beispiel eingepasst oder eingeschraubt, sind: eine solche Ausführung ist beispielsweise geeignet, wenn die Wandung der Vorrichtung aus Edelstahl besteht, wobei die Abdichtung durch Verklebung oder auf andere an sich bekannte Weise erfolgt.

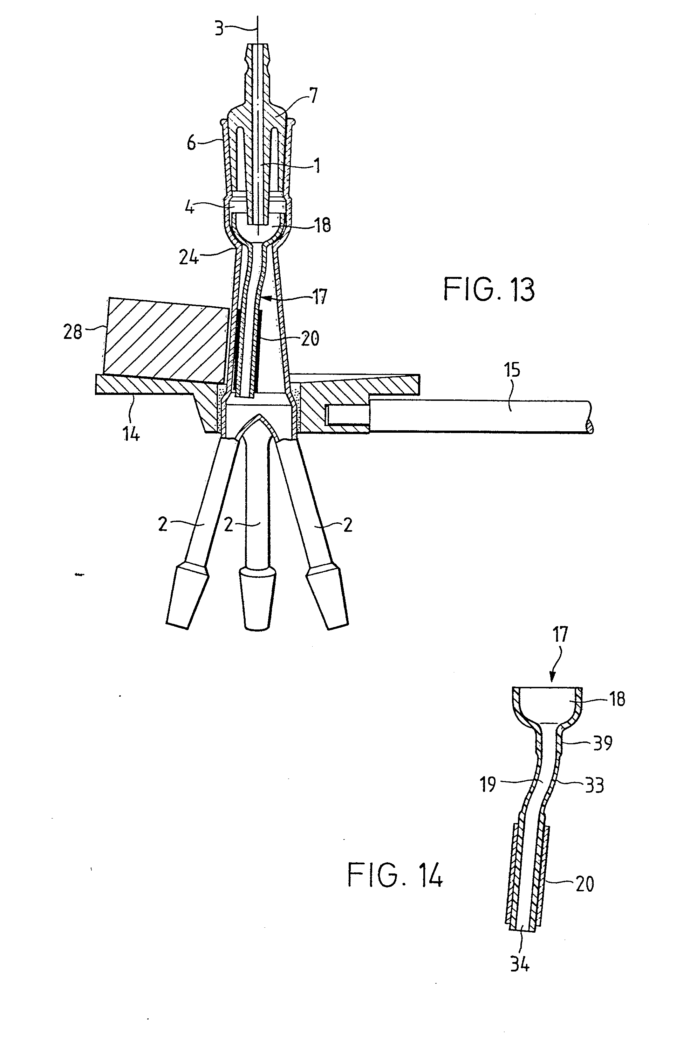

In den Fig. 13 bis 17 sind Ausführungsbeispiele des Umleitelements 17 dargestellt, deren Prinzip darauf beruht, dass der Abstützteil 18 im wesentlichen unbeweglich und der Auslauf 19 flexibel sind. In diesen Ausführungsbeispielen besteht das Umleitelement 17 aus Kunststoff, beispielsweise aus Polyäthylen oder Polytetrafluoräthylen. Der rohrförmige Auslauf 19 ist in einem mittleren Teil 33 so dünnwandig ausgebildet, dass ein flexibles Rohr oder ein Schlauch gebildet wird; in seinem unteren Teil 34 kann der Auslauf 19 mit einer grösseren Wanddicke etwas steifer ausgebildet werden, damit der hülsenförmige magnetische Körper 20 daran sicher, form- und kraftschlüssig angeordnet werden kann.

In der Ausführung nach Fig. 14 ist der Abstützteil 18 als kelchförmiger Trichter ausgebildet, der nach unten zum Auslauf 19 führt; die Wanddicke und der Aussendurchmesser dieses Abstützteils 18 sind so bemessen, dass eine sichere Abstützung des Umleitelements 17 an der Verengung 24 der Innenseite der Kammer 4 erreicht wird, wenn das Umleitelement 17 wie in Fig. 13 dargestellt durch den geöffneten Normschliff-Verschluss 6,7 hindurch in die Kammer 4 eingesetzt wird. Daher ist die Wanddicke des Abstützteils 18 mit Vorteil etwas grösser als die Wanddicke des mittleren Teils 33 des Auslaufs 19, wie in Fig. 14 dargestellt. Es kann auch zweckmässig sein, einen oberen, dem Abstützteil 18 benachbarten Teil 39 des Auslaufs 19 etwas dickwandiger und daher steifer zu gestalten als den mittleren, vom Abstützteil 18 beabstandeten Teil 33. Die aussenseitige Form des Abstützteils 18 ist der innenseitigen Form der Kammer 4 oberhalb der Verengung 24 angepasst, so dass der Abstützteil 18 im wesentlichen ortsfest bleibt, wenn der untere Teil 34 des Auslaufs 19 zufolge von Magnetkraft und dank der Flexibilität des mittleren Teils 33 des Auslaufs 19 eine Schwenkbewegung durchführt. In Fig. 14 ist der mittlere Teil 33 des Auslaufs 19 S-förmig dargestellt, um die Flexibilität zu veranschaulichen: in der Realität wirken sich die Formverhältnisse und die Schwerkraft dahingehend aus, dass der Auslauf 19 im wesentlichen gerade oder etwa hyperbolisch gekrümmt ist, wobei eine momentane Schwenkung jeweils um einen momentanen Drehpunkt erfolgt, der auf der Achse des Auslaufs 19 in Nähe des Abstützteils 18 und meist im Bereich des oberen Teils 39 des Auslaufs 19 liegt.

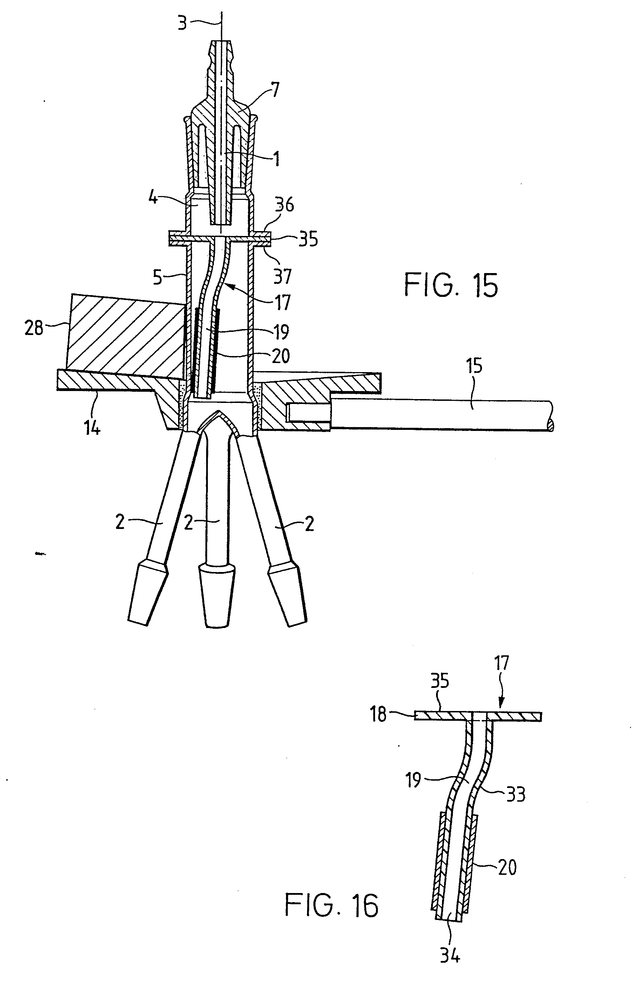

In der Ausführung nach Fig. 16 besteht der Unterschied zur Ausführung nach Fig. 14 im wesentlichen darin, dass der Abstützteil 18 als Flansch oder im wesentlichen scheibenförmiges Element 35 ausgebildet ist. Der Flansch 35 wirkt als Verengung der Kammer 4, während diese wie in Fig. 15 dargestellt, zur Aufnahme des Flansches 35 zweigeteilt und mit Flanschen 36 und 37 versehen ist. Der Flansch 35 wird auf an sich bekannte Weise horizontal zwischen den Flanschen 36 und 37 angeordnet und mit nicht dargestellten Mitteln gehalten und angedrückt, wobei ebenfalls nicht dargestellte Mittel zur Abdichtung verwendet werden können.

Die beschriebene Vorrichtung ist dank ihrer Einfachheit besonders klein und kostengünstig. Sie enthält nur ein einziges bewegliches Teil, nämlich das Umleitelement (vom Permanentmagneten abgesehen), und dieses ist leicht einzusetzen, herauszunehmen und zu reinigen. Die Abdichtung von beweglichen Teilen fällt gänzlich aus. Die Form des Trichters des Umleitelements 17 und die Tatsache, dass eine Schwenkbewegung des Auslaufs 19 eine nur geringe oder gar keine Kippbewegung des Abstützteils 18 bewirkt, haben zur Folge, dass die Kammer 4 im Durchmesser kaum grösser ist als das Umleitelement 17 und dass keine Hilfsteile seitlich an der Kammer 4 angeordnet sind: dadurch wird die Vorrichtung klein und handlich gehalten, was wiederum zur kostengünstigen Fertigung beiträgt. Die Vorrichtung ist zur Automatisierung des Betriebs besonders geeignet, weil das Fehlen von abzudichtenden beweglichen Teilen eine hohe mechanische, beziehungsweise vakuumtechnische Zuverlässigkeit ermöglicht. Auch die an sich bekannte Verwendung von Elektromagneten ist für die Automatisierung günstig, während die Variante mit einem Permanentmagneten eine besonders preisgünstige Lösung für den Handbetrieb bietet. Der technische Erfolg, der mit der Erfindung erreicht wird, ist also beachtlich.

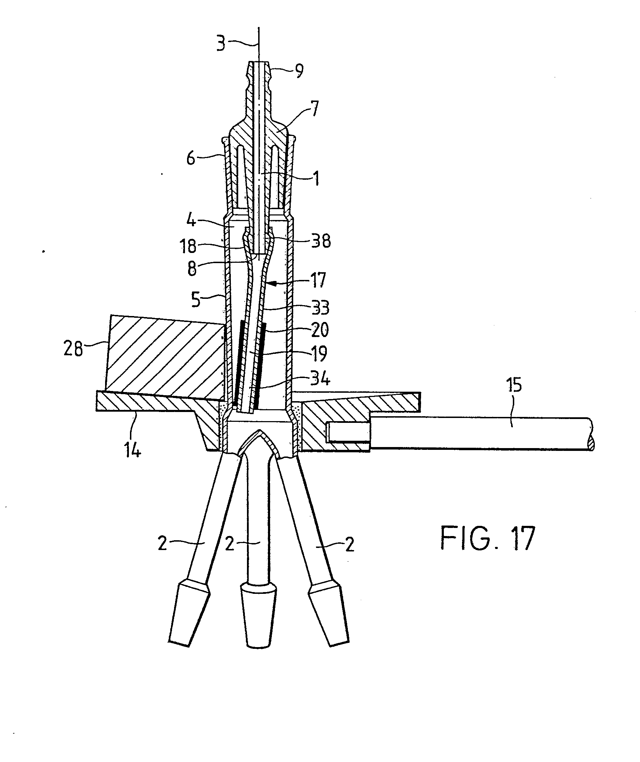

In Fig. 17 wird ein besonders kostengünstiges fünftes Ausführungsbeispiel des Umleitelements 17 dargestellt. Der rohrförmige Zufluss 1 ist oben wie in Fig. 1 mit einem als Rohr mit Olive ausgebildeten Stutzen 9 verbunden und am oberen Rand des Kerns 7 dicht abgestützt; in Fig. 17 ist der Zufluss 1 aber auch in Nähe seines unteren Endes 8 als Rohr mit Olive, das heisst als Stutzen 38 ausgebildet. Der Kern 7 dient als Träger und Stütze für den Zufluss 1 und die beiden Stutzen 9 und 38, er selbst ist über die Hülse 6 auf die Wandung 5 der Kammer 4 abgestützt. In dem in Fig. 17 dargestellten dritten Ausführungsbeispiel der Kammer 4 ist diese im wesentlichen zylindrisch. Das flexible Umleitelement 17 ist in seinem unteren Teil 34 und in seinem mittleren Teil 33 wieder so ausgebildet, wie im vorangehenden bereits beschrieben; der Abstützteil 18 hingegen ist hier nur mehr eine Verlängerung des mittleren Teils 33, es ist also dasselbe flexible Rohr oder derselbe Schlauch. Dieser Schlauch ist auf den Stutzen 38 aufgeschoben und dort durch die Olive gehaltert: als Abstützteil 18 betrachtet ist der auf dem Stutzen 38 aufgeschobene Teil des Umleitelements 17 ortsfest in der Kammer 4 angeordnet sowie über und mit dem Stutzen 38 auf die Wandung 5 der Kammer 4 abgestützt. Das Umleitelement 17 ist dank der Flexibilität zumindest seines mittleren Teils 33 schwenkbar. In dieser Ausführung der Vorrichtung ist das Umleitelement nicht mehr einzeln, sondern nur mit dem Zufluss in die Vorrichtung einsetzbar, beziehungsweise herausnehmbar; zu Reinigungszwecken ist die Trennung des Umleitelements vom Zufluss nicht besonders leicht, diese beiden Elemente können jedoch sehr leicht zusammen und gleichzeitig gereinigt werden. Dafür ist die Ausführung besonders einfach und kostengünstig.

Patentansprüche

1. Vorrichtung zur wahlweisen Zuleitung einer rieselnden Substanz, insbesondere eines Destillats, eines Kondensats oder einer chromatographischen Fraktion, von einem Zufluss (1) zu einem von mehreren Abflüssen (2), mit einem zumindest einen Abstützteil (18) sowie einen rohrförmigen Auslauf (19) umfassenden Umleitelement (17), wobei zumindest der Auslauf (19) durch magnetische Mittel zwischen mehreren je einem Abfluss zugeordneten Raststellungen bewegbar ist und in jeder Raststellung die Substanz zum entsprechenden Abfluss zuleitet, ferner mit einer Kammer (4), die mit ihrer Wandung (5) zumindest den vom Umleitelement in den Raststellungen beanspruchten sowie auf seinem Weg zwischen den Raststellungen beschriebenen Raum umschliesst, schliesslich mit mindestens einem an der Aussenseite der Wandung angeordneten Mittel (16;28) zum Erzeugen eines Magnetfeldes, gekennzeichnet durch einen in seinen Aussenmassen mindestens doppelt so lang wie breit ausgebildeten Auslauf (19), an dem ein magnetischer Körper (20) kraftschlüssig angeordnet ist und der mittels des Abstützteils auf die Wandung schwenkbar abgestützt ist, wobei eine momentane Schwenkung jeweils um einen in Nähe des Abstützteils (18) auf der Achse des Auslaufs (19) gelegenen momentanen Drehpunkt erfolgt, während der Abstützteil (18) bei der Schwenkung im wesentlichen ortsfest bleibt.

2. Vorrichtung nach Anspruch 1 mit einem aus nichtmagnetischem Material bestehenden Auslauf, dadurch gekennzeichnet, dass der magnetische Körper (20) im wesentlichen hülsenförmig ausgebildet und koaxial zum Auslauf (19) angeordnet ist.

0099961

3. Vorrichtung nach Anspruch 2, dadurch gekennzeichnet, dass der magnetische Körper (20) den Auslauf (19) umschliesst.

4. Vorrichtung nach Anspruch 2, dadurch gekennzeichnet, dass der magnetische Körper (20) in der Wandung (21) des Auslaufs (19) eingebettet ist.

5. Vorrichtung nach Anspruch 1, dadurch gekennzeichnet, dass zumindest ein vom Abstützteil (18) beabstandeter Teil des Auslaufs (19) aus magnetischem Material besteht und somit auch den magnetischen Körper bildet.

6. Vorrichtung nach Anspruch 1, dadurch gekennzeichnet, dass das Umleitelement (17) aus steifem Material besteht, der Abstützteil (18) als in Betriebsstellung der Vorrichtung nach unten zum Auslauf (18) führender kelchförmiger Trichter ausgebildet ist, der dem Auslauf benachbarte Teil des Trichterkelches (22) auf eine Verengung (24) der Kammer (4) abgestützt ist und zumindest ein dem Trichterkelch (22) benachbarter Teil (23) des Auslaufs (19) innerhalb der Verengung (24) frei darin beweglich angeordnet ist.

7. Vorrichtung nach Anspruch 6, dadurch gekennzeichnet, dass die Verengung (24) als im wesentlichen rotationssymmetrische, in Betriebsstellung der Vorrichtung horizontale Einschnürung und der dem Auslauf (19) benachbarte Teil (23) des Trichterkelches (22) im wesentlichen als Kugelzone ausgebildet sind.

8. Vorrichtung nach Anspruch 6, dadurch gekennzeichnet, dass die Verengung (24) als im wesentlichen scheibenförmiges, in Betriebsstellung der Vorrichtung horizontal in der Kammer (4) angeordnetes, auf der Wandung (5) der Kammer (4) abgestütztes Element (29) und der dem Auslauf (19) benachbarte Teil (23) des Trichterkelches (22) im wesentlichen als Kugelzone ausgebildet sind.

9. Vorrichtung nach Anspruch 6, dadurch gekennzeichnet, dass die Verengung (24) aus einer Mehrzahl von konsolenartig an der Wandung (5) der Kammer (4) angeordneten und ins Innere der Kammer hineinragenden Stützelementen (31,32) besteht.

10. Vorrichtung nach Anspruch 1, dadurch gekennzeichnet, dass zumindest ein vom Abstützteil (18) beabstandeter Teil (33) des Auslaufs (19) aus flexiblem Material besteht, während der Abstützteil (18) als in Betriebsstellung der Vorrichtung nach unten zum Auslauf führendes Element ausgebildet und in der Kammer (4) im wesentlichen ortsfest angeordnet ist.

11. Vorrichtung nach Anspruch 1, dadurch gekennzeichnet, dass zumindest ein vom Abstützteil (18) beabstandeter Teil (33) des Auslaufs (19) aus flexiblem Material besteht, während der Abstützteil (18) als im wesentlichen scheibenförmiges, in Betriebsstellung der Vorrichtung horizontal in der Kammer (4) ortsfest angeordnetes Element (35) ausgebildet ist.

0099961

FIG. 1

FIG. 2

0099961

FIG. 3  FIG. 4  FIG. 5  FIG. 6  FIG. 7

FIG. 8

0099961

FIG. 9

FIG. 10

FIG. 11

FIG. 12

FIG. 13

FIG. 14

FIG. 15

FIG. 16

0099961

FIG. 17

Europäisches
Patentamt

**EUROPÄISCHER RECHERCHENBERICHT**

0099961

Nummer der Anmeldung

EP  83 10 3918

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-2 251 185  (A.S. CARTER et al.) <br> * Spalte 2, Zeilen 7-47; Figuren * | 1,2,4 | B 01 D  3/42 <br> B 01 L  3/00 <br> B 01 D  15/08 |
| | --- | | |
| X,Y | US-A-2 129 502  (H.J. McCREARY) <br><br> * Spalte 1, Zeilen 6-13, 33-55; Spalte 2, Zeilen 14-40; Figuren * | 1-3,6, 9 | |
| | --- | | |
| Y,D | FR-A-1 190 289  (JENAER GLASWERK SCHOTT & GEN.) <br> * Seite 1, Zeilen 37-44; Seite 2, linke Spalte, Figuren * | 1 | |
| | --- | | |
| A | FR-A-2 373 314  (COMPAGNIE FRANCAISE DE RAFFINAGE) <br> * Seite 12, Zeile 23 - Seite 13, Zeile 33; Figur 4 * | 1 | RECHERCHIERTE SACHGEBIETE (Int. Cl. ³) |
| | ----- | | |
| | | | B 01 D <br> B 01 L <br> G 01 N |

Der vorliegende Recherchenbericht wurde für alle Patentansprüche erstellt.

| Recherchenort <br> DEN HAAG | Abschlußdatum der Recherche <br> 26-10-1983 | Prüfer <br> VAN BELLEGHEM W.R. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82